Europäisches Patentamt

European Patent Office

Office européen des brevets

(19)

(11) Veröffentlichungsnummer: **0 226 712**
**B1**

(12) **EUROPÄISCHE PATENTSCHRIFT**

(45) Veröffentlichungstag der Patentschrift:
05.12.90

(51) Int. Cl.⁵: **B60T 17/08**

(21) Anmeldenummer: 86112206.7

(22) Anmeldetag: 03.09.86

(54) **Bremszylinder.**

(30) Priorität: 07.12.85 DE 3543365

(43) Veröffentlichungstag der Anmeldung:
01.07.87 Patentblatt 87/27

(45) Bekanntmachung des Hinweises auf die Patenterteilung:
05.12.90 Patentblatt 90/49

(84) Benannte Vertragsstaaten:
DE FR GB IT NL SE

(56) Entgegenhaltungen:
DE-A- 3 241 547
FR-A- 2 521 651

(73) Patentinhaber: WABCO Westinghouse
Fahrzeugbremsen GmbH, Am Lindener
Hafen 21 Postfach 91 12 80, D-3000 Hannover 91(DE)

(72) Erfinder: Ewald, Jürgen, Würzburger Strasse 14,
D-3014 Laatzen 1(DE)
Erfinder: Frania, Josef, An der Bauerwiese 10 d,
D-3000 Hannover 91(DE)
Erfinder: Glogowschek, Roland, Ing. (grad.),
Skagenhof 7, D-3000 Hannover 91(DE)

(74) Vertreter: Schrödter, Manfred, WABCO Westinghouse
Fahrzeugbremsen GmbH Am Lindener
Hafen 21 Postfach 91 12 80, D-3000 Hannover 91(DE)

**Beschreibung**

Die Erfindung betrifft einen Bremszylinder nach dem Oberbegriff des Patentanspruchs 1.

Ein derartiger Bremszylinder ist aus der DE-A-32 41 547 bekannt. Zur Bildung einer Bajonettverbindung weist dieser Bremszylinder im Zylindergehäuse eine durch teilweises Ausstanzen und radiales Einwärtsbiegen einer Zunge hergestellte Vertiefung und im Zylinderboden eine teilweise umlaufende Nut auf, in welch letztere die genannte Vertiefung eingreift. Der bekannte Bremszylinder bietet damit eine nach außen offene Bajonettverbindung, welche durch Umwelteinflüsse, insbesondere durch eintretende Feuchtigkeit und/oder Verschmutzung, in der Weise Schaden nehmen kann, daß sie schwer oder überhaupt nicht demontierbar wird.

Der Erfindung liegt deshalb die Aufgabe zugrunde, einen Bremszylinder der eingangs genannten Art mit einfachen Mitteln so zu verbessern, daß er jederzeit leichtdemontierbar ist.

Diese Aufgabe wird durch die im Patentanspruch 1 angegebene Erfindung gelöst. Weiterbildungen und vorteilhafte Ausgestaltungen sind in den Unteransprüchen angegeben.

Durch die Erfindung wird sinngemäß die Bajonettverbindung in den druckbeaufschlagten Bereich des Bremszylinders einbezogen und dadurch vor Umwelteinflüssen geschützt.

Bei dem eingangs erwähnten Bremszylinder mit einem Zylindergehäuse aus gezogenem Blech werden die Axialkräfte stirnseitig von den teilweise ausgestanzten und einwärts gebogenen (Blech)- Zungen aufgenommen und auf den Zylinderboden übertragen. Die Größe der Stützfläche ist durch das Produkt aus Blechstärke und gesamter Bogenlänge aller einwärts gebogenen Zungen bestimmt. Bei Leichtbauzylindern, d.h. solchen mit Zylindergehäusen mit relativ dünner Wandstärke muß daher mit vergleichsweise hoher spezifischer Flächenbelastung an den Verbindungs- bzw. Stützflächen gerechnet werden. Besonders kritisch wird diese Belastung, wenn das Zylindergehäuse und/oder der Zylinderboden aus Aluminiumlegierung (en) hergestellt sind. Die Erfindung bietet demgegenüber den Vorteil, daß sich in einem Bremszylinder der eingangs genannten Art ohne Probleme ein Zylindergehäuse aus relativ dünnem Blechmaterial, auch aus Aluminiumlegierung (en) und/oder auch ein Zylinderboden aus Aluminiumlegierung(en) einsetzen lassen.

Die Erfindung läßt sich vorteilhaft bei jeder gattungsgemäßen Bremszylinderbauart, wie beispielsweise Betriebsbremszylinder oder Federspeicherzylinder oder einer Kombination davon, ausführen.

In vorteilhafter Weise kann die Druckmittelzufuhr zu der Druckkammer in dem Zylinderboden angeordnet sein.

Im Falle eines kombinierten Bremszylinders kann der Zylinderboden in kostengünstiger Weise als die Einzelzylinder verbindender Zwischenflansch ausgebildet sein. In diesem Fall kann der Zwischenflansch einerseits die Druckkammer des Federspeicherzylinders, welche in bekannter Weise als Lösekammer dient, und andererseits eine Druckkammer des Betriebsbremszylinders begrenzen. Im letztgenannten Fall kann der Zwischenflansch auch die Druckmittelzufuhr zur Druckkammer des Betriebsbremszylinders enthalten.

Die Erfindung gestattet den Einsatz einer bzw. eines oder mehrerer auf dem Umfang im Überdeckungsbereich verteilter Vertiefung (en) bzw. Vorsprünge zur Bildung der Bajonettverbindung.

In einer kostengünstigen Ausgestaltung ist das Zylindergehäuse wenigstens im Bereich des radialen Vorsprungs bzw. der radialen Vertiefung tiefziehfähig ausgebildet. Vorsprung bzw. Vertiefung können in diesem Fall als auf einem Teil des Zylindergehäuseumfangs in dessen Umfangsrichtung verlaufende Sicke eingeprägt sein.

Der radiale Vorsprung im Zylindergehäuse kann auch umlaufend, insbesondere als umlaufende Sicke ausgebildet sein.

Es liegt auf der Hand, daß die vorstehend für einen radialen Vorsprung bzw. eine radiale Vertiefung gemachten Ausführungen für mehrere auf dem Umfang verteilte Vorsprünge bzw. Vertiefungen entsprechend gelten.

Die Erfindung wird nachstehend anhand von in Zeichnungen dargestellten Ausführungsbeispielen erläutert.

Es zeigen

Fig. 1 einen kombinierten Federspeicher-/Betriebsbremszylinder mit einer Ausgestaltung einer Bajonettverbindung im oberen Figurenteil und einer anderen Ausgestaltung im unteren Figurenteil,

Fig. 2 in Ansicht (Richtung A der Fig. 1) Einzelheiten der einen Ausgestaltung der Bajonettverbindung,

Fig. 3 in Ansicht (Richtung B der Fig. 1) Einzelheiten der anderen Ausgestaltung der Bajonettverbindung.

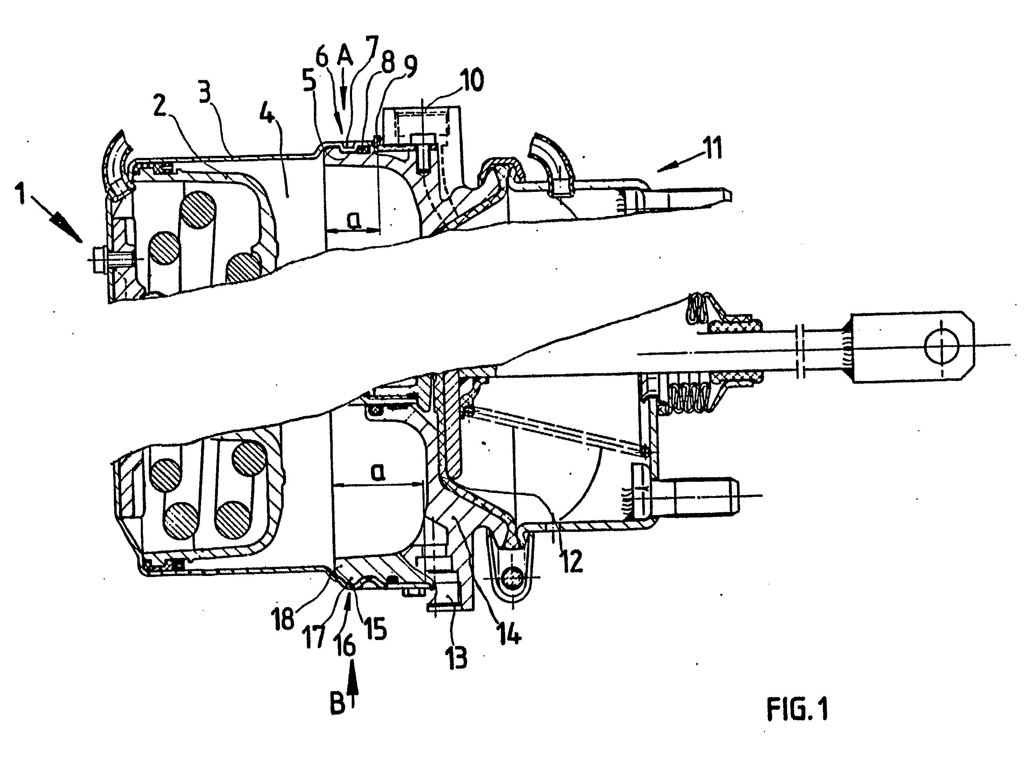

Der in Fig. 1 dargestellte kombinierte Federspeicher-/Betriebsbremszylinder besteht aus einem Federspeicherteil 1 als Federspeicherzylinder und einem Betriebsbremsteil 11 als Betriebsbremszylinder, die jeder für sich genommen bekannten Bauweisen entsprechen, wobei in ebenfalls bekannter Weise die Zuspannkraft des Bremskolbens 2 des Federspeicherteils 1 über den nicht näher bezeichneten Kolben des Betriebsbremsteils 11 auf die nicht dargestellten nachgeordneten Bremseinrichtungen übertragen wird.

Zwischen beiden genannten Zylinderteilen ist ein Zwischenflansch 14 angeordnet, der mit seiner dem Betriebsbremsteil 11 zugewandten Fläche dessen Druckkammer 12 begrenzt und auch die Druckmittelzufuhr 10 zu letzterer enthält.

Der Federspeicherteil 1 stellt einen Bremszylinder dar, dessen Lösekammer 4 eine in einem Zylindergehäuse 3 eingeschlossene Druckkammer darstellt, die einerseits von dem Federspeicherkolben als Bremskolben 2 und andererseits von dem als Zylinderboden dienenden Zwischenflansch 14 begrenzt ist. Ein in das Zylindergehäuse 3 axial hineinragender Teil 18 des Zwischenflansches 14 bildet mit dem Zylindergehäuse 3 einen axialen Überdeckungsbereich a. In diesem Überdeckungsbereiche a ist in einer umlaufenden Nut des Zwischenflansches 14 ein zur Abdichtung der Lösekammer 4 dienendes umlaufendes Dichtelement 8 angeordnet, welches eine der Lösekammer 4 zugewandte und eine der Umgebung zugewandte (axiale) Seite aufweist. In dem Zwischenflansch 14 ist auch eine Druckmittelzufuhr 13 zur Lösekammer 4 vorgesehen.

Das Zylindergehäuse 3 ünd der Zwischenflansch 14 sind durch eine Bajonettverbindung 6 oder 16 zusammengefügt, welche sich im Überdeckungsbereich a neben der der Lösekammer 4 zugewandten (axialen) Seite des Dichtelementes 8 befindet.

In ihren Einzelheiten unterscheidet sich die im oberen Figurenteil dargestellte Ausgestaltung der Bajonettverbindung 6 von der im unteren Figurenteil dargestellten Ausgestaltung 16.

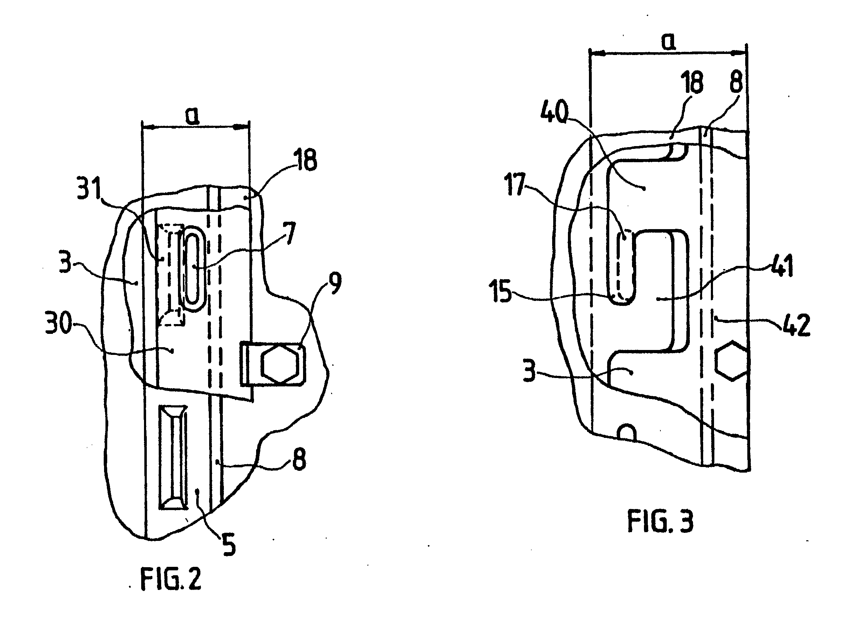

Die Bajonettverbindung 6 entsteht durch den Eingriff mehrerer auf dem Umfang des Zylindergehäuses 3 verteilter radialer Vertiefungen mit dazu komplementären Vertiefungen im Zwischenflansch 14. Beispielhaft für diese Ausgestaltung sind im Schnitt eine Vertiefung 7 im Zylindergehäuse 3 und eine Vertiefung 5 im Zwischenflansch 14 dargestellt, welch letztere die Form einer umlaufenden Nut mit axialen Anschlüssen (Pos. 30 in Fig. 2) zur Lösekammer 4 hin aufweist uhd zur Verbilligung der Fertigung mit der umlaufenden Nut für das Dichtelement 8 vereinigt ist. In einer anderen Ausgestaltung können die Vertiefungen 5 als Einzelvertiefungen mit jeweils einem axialen Anschluß zur Lösekammer 4 hin ausgebildet sein. Mit 9 ist ein am Zwischenflansch 14 befestigter Winkel bezeichnet, dessen vom Zwischenflansch 14 weggebogener Schenkel zugleich als Verdrehsicherung für die Bajonettverbindung 6 dient.

Die im unteren Figurenteil dargestellte Bajonettverbindung 16 entsteht durch den Eingriff mehrerer auf dem Umfang des Zylindergehäuses 3 verteilter radialer Vorsprünge im Zylindergehäuse 3 mit dazu komplementären Vorsprüngen im Zwischenflansch 14. Beispielhaft für diese Ausgestaltung sind im Schnitt ein Vorsprung 15 im Zylindergehäuse 3 und ein solcher 17 im Zwischenflansch 14 dargestellt. Die Verdrehsicherung der Bajonettverbindung 16 erfolgt durch Verschrauben des Zylindergehäuses 3 mit dem Zwischenflansch 14 mittels einer radial angeordneten nicht näher bezeichneten Schraube.

Es liegt auf der Hand, daß die dargestellten Zuordnungen von Bajonettverbindungen und Verdrehsicherung ausgetauscht werden und auch andere bekannte Verdrehsicherungen eingesetzt werden können.

Die erwähnten Bajonettverbindungen können auch nur aus den beispielhaft beschriebenen einzelnen Vertiefungen bzw. Vorsprüngen bestehen, sofern diese ausreichend bemessen sind. Die Vertiefungen 7 im Zylindergehäuse 3 im oberen Figurenteil und die Vorsprünge 17 im Zwischenflansch 14 im unteren Figurenteil können jeweils warzenförmig oder in Umfangsrichtung länglich ausgebildet sein.

Die erwähnten Vertiefungen 7 und Vorsprünge 15 im Zylindergehäuse 3 müssen in sich und in ihrer Verbindung zum Zylindergehäuse 3 druckdicht sein. Dies kann beispielsweise durch einstückige Ausbildung mit oder durch druckdichte Befestigung, z.B. durch Schweißen, an dem Zylindergehäuse 3 sichergestellt werden.

Durch die genannte druckdichte Ausbildung und durch die Anordnung der Bajonettverbindungen 6 bzw. 15 auf der druckbelasteten Seite des Dichtelementes 8 können Umwelteinflüsse weder über die Bajonettverbindungen 6 bzw. 16 selbst noch durch den umlaufenden Spalt zwischen Zylindergehäuse 3 und Zwischenflansch 14 am Ende des Zylindergehäuses 3 in die Bajonettverbindung eindringen. Das heißt, die Bajonettverbindungen sind dem Zutritt von Umgebungseinflüssen, wie Feuchtigkeit und Schmutz entzogen, wodurch der stellvertretend für einen Bremszylinder schlechthin dargestellte Federspeicherteil 1 jederzeit in umgekehrter Folge der weiter unten beschriebenen Arbeitsgänge beim Zusammenfügen leicht demontierbar ist bzw. bleibt.

Das Zylindergehäuse 3 des Ausführungsbeispiels ist ein Tiefziehteil. Die erwähnten Vertiefungen 7 bzw. Vorsprünge 15 können deshalb kostengünstig als eingeprägte Sicken hergestellt sein. Diese Lösung ist auch möglich, wenn das Zylindergehäuse nur im Bereich der Vertiefungen bzw. Vorsprünge tiefziehfähig ist, z.B. wenn es ein Alu-Kaltfließpreßteil ist, welches an Stellen außerhalb des Überdeckungsbereiches a zur Aussteifung größere Wandstärken aufweist.

Stellt sich der Fachmann den Betriebsbremszylinder 11 weggefallen vor, so erkennt er, daß der Zwischenflansch 14 dann zu einem üblichen Zylinderboden des Federspeicherteils 1 vereinfacht werden kann. Das Ausführungsbeispiel steht demzufolge auch für einen rein als Federspeicherzylinder ausgebildeten Bremszylinder.

Denkt sich im vorgenannten Fall der Fachmann die starke, nicht näher bezeichnete Speicherfeder ersatzlos entfallen oder durch eine Rückstellfeder ersetzt, so steht das Ausführungsbeispiel auch für einen Betriebsbremszylinder in ziehender Ausführung. Durch Verlegung der nicht näher bezeichneten Kolbenstange auf die andere Kolbenseite mit entsprechender Durchführung durch die Stirnseite des Zylindergehäuses und Verschchließen der im Ausführungsbeispiel dargestellten Durchführung der Kolbenstange durch den Zylinderboden wird aus dem ziehenden Betriebsbremszylinder ein drückender.

Die Figuren 2 und 3 stellen Ansichten der Bajonettverbindungen 6 und 16 in den in Fig. 1 angegebenen Richungen A bzw. B dar.

Fig. 2 läßt die umlaufende Nut 5 in dem axial in das Zylindergehäuse 3 hineinragenden Teil 18 des Zwischenflansches 14 erkennen, in welcher sowohl die Vertiefung 7 des Zylindergehäuses 3 als auch das Dichtelement 8 angeordnet sind. Die Fig. läßt weiter einen axialen Anschluß 30 als Durchbruch in dem die Nut 5 zur Lösekammer 4 hin begrenzenden Bund 31 erkennen. Der Anschluß 30 besitzt in Umfangsrichtung im wesentlichen die gleiche Länge wie die Vertiefung 7 und dient dem Zusammenfügen des als Federspeicherteil 1 ausgebildeten Bremszylinders. Bei diesem Zusammenfügen wird erst das Dichtelement 8 in die Nut 5 eingelegt. Anschließend werden das Zylindergehäuse 3 und der Zwischenflansch 14 axial ineinander geschoben derart, daß die Vertiefung 7 durch den Anschluß 30 hindurch in die Nut 5 gelangt. Sodann wird durch Drehen des Zylindergehäuses 3 oder des Zwischenflansches 14 oder beider relativ zueinander die Vertiefung 7 in die dargestellte Lage gebracht, wodurch das Zylindergehäuse 3 und der Zwischenflansch 14 axial formschlüssig zusammengefügt werden. Die Drehsicherung der beschriebenen Bajonettverbindung übernimmt, wie weiter oben bereits ausgeführt, der Winkel 9. Zu diesem Zweck ist der Rand des Zylindergehäuses 3 zur Aufnahme dessen nach oben abgewinkelten Schenkels, wie aus der Darstellung ersichtlich, ausgespart. Die erwähnte formschlüssige Verbindung zwischen Zylindergehäuse 3 und Zwischenflansch 14 wird durch den Lösedruck in der Lösekammer 4 bzw. dadurch, daß die Speicherfeder sich im betätigten Zustand an dem Zylindergehäuse 3 abstützt, im üblichen Rahmen spielfrei gehalten. In anderen Ausgestaltungen, insbesondere, wenn diese Einflüsse nicht ständig vorhanden sind, kann diese Spielfreiheit dadurch erzielt werden, daß die Vertiefung 7 und das Dichtelement 8 in der gemeinsamen Nut 5 unter gegenseitiger Vorspannung stehen. In diesen Ausgestaltungen ist im Falle getrennter Nuten, wie der Fachmann erkennt, zum Zwecke der üblichen bzw. erforderlichen Spielfreiheit eine ausreichend genaue Fertigung der Vertiefung 7 und der dazu komplementären Vertiefung im Zylindergehäuse 14 erforderlich.

Fig 3 läßt den in Umfangsrichtung länglichen Vorsprung 15 und, gestrichelt, den ebenfalls in Umfangsrichtung länglichen dazu komplementären Vorsprung 17 in Zwischenflansch 14 erkennen. Der Vorsprung 15 ist durch einen Anschluß 40 mit dem Rand des Zylinderge häuses 3 verbunden. Durch diesen Anschluß 40 kann beim Zusammenfügen des von dem Federspeicherteil 1 repräsentierten Bremszylinders der Vorsprung 17 in das Zylindergehäuse 3 bis zum Fluchten mit dem Vorsprung 15 eindringen. Breite des Anschlusses 40 in Umfangsrichtung und seine Höhe müssen deshalb auf die entsprechenden Abmessungen des Vorsprungs 17 abgestimmt sein. Der Anschluß 40 geht in eine am Rand des Zylindergehäuses 3 umlaufende Aufweitung 42 über, deren Innendurchmesser wenigstens dem durch die lichte Höhe des Anschlusses 40 gesetzten Maß entspricht. Mit der umlaufenden Innenfläche der Aufweitung 42 tritt im Einbauzustand das Dichtelement 8 in dichtende Wirkverbindung. Der durch 41 gekennzeichnete Bereich zwischen Vorsprung 15, Aufweitung 42 und benachbarten Anschlüssen 40 ist diesen gegenüber angesenkt. In einer nicht dargestellten Ausgestaltung können die Vorsprünge 15 im Zylindergehäuse 3 als umlaufender Vorsprung, insbesondere in Form einer umlaufenden Sicke, zusammenhängend ausgebildet sein.

Beim Zusammenbau des nach Fig. 3 ausgebildeten Bremszylinders treten die oben erwähnten Arbeitsgänge in entsprechender Anwendung auf. Zur Erzielung der erwähnten Spielfreiheit gilt das oben für den Fall getrennter Nuten Gesagte entsprechend.

Der Anwendungsbereich der Erfindung ist durch die vorstehenden Ausführungen nicht erschöpfend beschrieben. Vielmehr erkennt der Fachmann, daß sich die Erfindung auf alle Ausgestaltungen mit den Merkmalen des Patentanspruchs 1 erstreckt.

**Patentansprüche**

1. Bremszylinder mit den Merkmalen:
   a. in einem Zylindergehäuse (3) ist eine Druckkammer (4) eingeschlossen, die einerseits von einem Bremskolben (2) und andererseits von einem Zylinderboden (14) begrenzt ist;
   b. der Zylinderboden (14) weist einen axialen in das Zylindergehäuse (3) hineinragenden Teil (18) auf, welcher mit dem Zylindergehäuse (3) einen axialen Überdeckungsbereich (a) bildet;
   c. in dem Überdeckungsbereich (a) ist ein die Druckkammer (4) abdichtendes umlaufendes Dichtelement (8) angeordnet;
   d. Zylindergehäuse (3) und Zylinderboden (14) sind durch eine Bajonettverbindung (6, 16) zusammengefügt, die in dem Überdeckungsbereich (a) durch wenigstens einen radialen Vorsprung (15) oder wenigstens eine radiale Vertiefung (7) im Zylindergehäuse (3) und einen dazu komplementären radialen Vorsprung (17) bzw. eine dazu komplementäre radiale Vertiefung (5) im Zylinderboden (14) gebildet wird, gekennzeichnet durch die Merkmale:
   e. der radiale Vorsprung (15) bzw. die radiale Vertiefung (7) im Zylindergehäuse (3) sind druckdicht ausgeführt;
   f. die Bajonettverbindung (6, 16) ist auf der druckbelasteten der Druckkammer (4) zugewandten Seite des umlaufenden Dichtelementes (8) angeordnet.

2. Bremszylinder nach Anspruch 1, dadurch gekennzeichnet, daß im Zylinderboden (14) ein Druckmitteleinlaß (13) zur Druckkammer (4) angeordnet ist.

3. Bremszylinder nach einem der Ansprüche 1 oder 2, dadurch gekennzeichnet, daß das Zylindergehäuse (3) wenigstens im Bereich des radialen Vorsprungs (15) bzw. der radialen Vertiefung (7) als auf einem Teil des Zylinderumfanges in dessen Umfangsrichtung verlaufende äußere bzw. innere Dicke eingeprägt sind.

4. Bremszylinder nach einem der vorhergehenden Ansprüche, dadurch gekennzeichnet, daß der Bremszylinder als Federspeicherzylinder (1) ausgebildet ist, wobei die Druckkammer dessen Lösekammer (4) bildet.

5. Bremszylinder nach Anspruch 4, dadurch gekennzeichnet, daß der Zylinderboden als Zwischenflansch (14) ausgebildet ist, an dessen dem Federspeicherzylinder (1) abgewandter Seite ein Betriebsbremszylinder (11) angeordnet ist, mit welchem der Federspeicherzylinder (1) einen kombinierten Federspeicher-/Betriebsbremszylinder bildet.

6. Bremszylinder nach Anspruch 5, dadurch gekennzeichnet, daß der Zwischenflansch (14) mit seiner der Lösekammer (4) abgewandten axialen Fläche eine Druckkammer (12) des Betriebsbremszylinders (11) begrenzt.

7. Bremszylinder nach Anspruch 6, dadurch gekennzeichnet, daß der Zwischenflansch (14) eine Druckmittelzufuhr (10) zur Druckkammer (12) des Betriebsbremszylinders (11) aufweist.

8. Bremszylinder nach einem der vorhergehenden Ansprüche, wobei die Bajonettverbindung (6) mit Vertiefungen (5, 7) gebildet ist, dadurch gekennzeichnet, daß die Vertiefung (5) im Zylinderboden (14) als umlaufende Nut ausgebildet ist, die auch das Dichtelement (8) aufnimmt.

## Claims

1. A brake cylinder having the features:
a) in a cylinder housing (3) there is enclosed a pressure chamber (4) which is defined at one end by a brake piston (2) and at the other end by a cylinder base (14);
b) projecting axially into the cylinder housing (3) the cylinder base (14) has a part (18) which with the cylinder housing (3) forms an axial overlap region (a);
c) in the overlap region (a) there is arranged a circumferential sealing element (8) sealing the pressure chamber (4);
d) the cylinder housing (3) and the cylinder base (14) are joined together by a bayonet coupling (6, 16) which, in the overlap region (a), is formed by at least one radial projection (15) or at least one radial indentation (17) in the cylinder housing (3), and by a respective complementary radial projection (17) and complementary radial indentation (5) in the cylinder base (14), characterized by the features:
e) the radial projection (15) and the radial indentation (17), respectively, in the cylinder housing (3) are of pressure-tight construction;
f) the bayonet coupling (6, 16) is arranged on the pressurized side of the circumferential sealing element (8) facing towards the pressure chamber (4).

2. A brake cylinder according to claim 1, characterized in that in the cylinder base (14) there is arranged a pressure medium inlet (13) to the pressure chamber (4).

3. A brake cylinder according to one of claims 1 or 2, characterized in that the cylinder housing (3), at least in the region of the radial projection (15) and the radial indentation (7) respectively, can be deep-drawn, and the projection (15) and indentation (7) are impressed as an external and internal crease, respectively, extending on a part of the cylinder circumference in the circumferential direction thereof.

4. A brake cylinder according to one of the preceding claims, characterized in that the brake cylinder is constructed as a spring-loaded cylinder (1), the pressure chamber forming the release chamber (4) thereof.

5. A brake cylinder according to claim 4, characterized in that the cylinder base is constructed as a medial flange (14), on the side of which remote from the spring-loaded cylinder (1) there is arranged a service brake cylinder (11) with which the spring-loaded cylinder (1) forms a combined spring-loaded/service brake cylinder.

6. A brake cylinder according to claim 5, characterized in that the medial flange (14) with its axial face remote from the release chamber (4) defines a pressure chamber (12) of the service brake cylinder (11).

7. A brake cylinder according to claim 6, characterized in that the medial flange (14) has a pressure medium supply (10) to the pressure chamber (12) of the service brake cylinder (11).

8. A brake cylinder according to one of the preceding claims, wherein the bayonet coupling (6) is formed with indentations (5, 7), characterized in that the indentation (5) in the cylinder base (14) is constructed as a circumferential groove which also receives the sealing element (8).

## Revendications

1. Cylindre de frein présentant les caractéristiques suivantes:
a) dans un carter de cylindre (3) est enclose une chambre de pression (4) qui est limitée d'une part par un piston de frein (2) et d'autre part par un fond de cylindre (14);
b) le fond de cylindre (14) présente une partie (18) qui pénètre axialement dans le carter de cylindre (3) et qui forme avec le carter de cylindre (3) une zone de recouvrement axiale (a);
c) dans la zone de recouvrement (a) est disposé un élément d'étanchéité périphérique (8) qui assure l'étanchéité de la chambre sous pression;
d) carter de cylindre (3) et fond de cylindre (14) sont assemblés par une liaison à baïonnette (6, 16) qui, dans la zone de recouvrement (a), est formée par au moins une saillie radiale (4) ou au moins un évidement radial (7) dans le carter de cylindre (3) et une saillie radiale complémentaire (17) ou un évidement radial complémentaire (5) dans le fond de cylindre (14), caractérisé par les caractéristiques suivantes:
e) la saillie radiale (15) ou l'évidement radial (7) sont exécutés dans le carter de cylindre (3) avec étanchéité à la pression;
f) la liaison à baïonnette (6, 16) est disposée du côté de l'élément d'étanchéité périphérique (8) qui est tourné vers la chambre de pression (4) et exposé à la pression.

2. Cylindre de frein selon la revendication 1, caractérisé en ce que dans le fond de cylindre (14) est disposée une entrée (13) du fluide sous pression dans la chambre de pression (4).

3. Cylindre de frein selon l'une des revendications 1 ou 2, caractérisé en ce que le carter de cylindre (3) est prévu capable d'être embouti au moins dans la zone de la saillie radiale (15) ou de l'évidement radial (7) et en ce que la saillie (15) ou l'évidement (7) sont estampés sous forme d'un soyage extérieur ou intérieur prévu sur une partie de la périphérie du cylindre et dirigé dans sa direction périphérique.

4. Cylindre de frein selon l'une des revendications précédentes, caractérisé en ce que le cylindre de frein est conçu sous forme d'un cylindre (1) accumulateur d'énergie élastique, la chambre de pression formant sa chambre de desserrage (4).

5. Cylindre de frein selon la revendication 4, caractérisé en ce que le fond de cylindre est conçu sous forme d'un flasque intermédiaire (14) sur la face, opposée au cylindre (1) accumulateur d'énergie élastique, duquel est disposé un cylindre (11) de frein de service avec lequel le cylindre (1) accumulateur d'énergie élastique forme une combinaison cylindre accumulateur d'énergie élastique/cylindre de frein de service.

6. Cylindre de frein selon la revendication 5, caractérisé en ce que le fasque intermédiaire (14), par sa surface axiale opposée à la chambre de desserrage (4), limite une chambre de pression (12) du cylindre (11) de frein de service.

7. Cylindre de frein selon la revendication 6, caractérisé en ce que le flasque intermédiaire (14) présente une arrivée (10) du fluide sous pression dans la chambre de pression (12) du cylindre (11) de frein de service.

8. Cylindre de frein selon l'une des revendications précédentes, dans lequel la liaison à baïonnette (6) est prévue avec des évidements (5, 7) caractérisé en ce que l'évidement (5) est conçu, dans le fond de cylindre (14), sous forme d'une rainure périphérique qui reprend également l'élément d'étanchéité (8).

FIG.1

EP 0 226 712 B1

FIG. 2

FIG. 3

EP 0 226 712 B1